# EUROPÄISCHE PATENTANMELDUNG

(11) **EP 2 990 577 A1**
(43) Veröffentlichungstag der Anmeldung: **02.03.2016**
(21) Anmeldenummer: 15182265.7
(22) Anmeldetag: 25.08.2015
(51) Int. Cl.: E06B 3/20, E06B 3/22, E06B 3/263

(54) **FENSTER**

(30) Priorität: 26.08.2014 AT 505922014
(71) Anmelder: IFN-Holding AG, 4050 Traun (AT)
(72) Erfinder: SEIMAYR, Kurt, 4491 Niederneukirchen (AT)
(74) Vertreter: Burger, Hannes

(57) **Zusammenfassung**

Die Erfindung betrifft ein Fenster oder eine Tür für ein Gebäude mit einem Flügelrahmen und einem Blendrahmen, wobei der Flügelrahmen miteinander verbundene Flügelrahmenprofile (2) und der Blendrahmen miteinander verbundene Blendrahmenprofile (1) aufweisen, und die Flügelrahmenprofile (2) und/oder die Blendrahmenprofile (1) zumindest einen Kern (3) aus zumindest einem Wärmedämmstoff aufweisen, der bei einer Massetemperatur im Extruder von 200 °C einem Druck von bis zu 150 bar standhält, und der von einer Umhüllung (4) aus einem thermoplastischen Kunststoff umgeben ist, wobei die Umhüllung (4) auf den Kern (3) aufextrudiert ist

## Beschreibung

Die Erfindung betrifft ein Fenster oder eine Tür für ein Gebäude mit einem Flügelrahmen und einem Blendrahmen, wobei der Flügelrahmen miteinander verbundene Flügelrahmenprofile und der Blendrahmen miteinander verbundene Blendrahmenprofile aufweisen. Weiter betrifft die Erfindung ein Verfahren zur Herstellung eines Fensters oder eine Tür für ein Gebäude nach dem aus Flügelrahmenprofilen ein Flügelrahmen und aus Blendrahmenprofilen ein Blendrahmen hergestellt wird, wobei die Flügelrahmenprofile und/oder die Blendrahmenprofile aus Kunststoffprofilen aus einem thermoplastischen Kunststoff extrudiert werden und in diesen Flügelrahmenprofilen und/oder die Blendrahmenprofilen ein wärmedämmender Kern angeordnet wird.

Für Fenster oder Türen zum Verschließen von Öffnungen in Gebäuden werden neben Metallen und Holz auch Kunststoffe zur Herstellung der entsprechenden Profile für den Flügelrahmen bzw. den Blendrahmen verwendet. Kunststoffe haben an sich bereits relative gute Wärmedämmeigenschaften. Zur Verbesserung dieser Wärmedämmeigenschaften werden aber immer häufiger zusätzliche Wärmedämmelemente in den Profilen angeordnet. Diese können aus Stangenmaterial bestehen, die nach der Herstellung der Kunststoffprofile in diese eingeschoben werden. Andererseits ist aber auch bekannt, dass diese zusätzlichen Wärmedämmelemente in den Profilen direkt aufgeschäumt werden, wozu in die Profile ein entsprechendes Rohmaterial zur Herstellung eines Kunststoffschaums eingebracht wird.

Neben der Wärmedämmung spielt bei derartigen Kunststofffenstern und Kunststofftüren aber auch die Steifigkeit eine nicht unwesentliche Rolle. Im Vergleich zu den Verbundgläsern, die zumindest als Zweischeibenisoliergläser, häufig aber auch schon als Drei- und Vierscheibenisoliergläser ausgeführt sind, sind die verwendeten Profile für den Flügelrahmen relativ schlank ausgeführt. Aus optischen Gründen werden zudem die Flügelrahmenprofile immer mehr zu Gunsten der Glasfläche reduziert, sodass also relativ schmale Profile eine hohe Glaslast tragen müssen. Um dabei das Durchbiegen der Flügelrahmen(profile) zu vermeiden, werden im inneren der Profile Versteifungsprofile angeordnet, die zum Großteil aus Metall bestehen. Dadurch wird aber wiederum der Wärmedämmwert (U-Wert) der Profile verschlechtert, da Metalle bekanntlich gute Wärmeleiter sind.

Der vorliegenden Erfindung liegt die Aufgabe zugrunde, ein Fenster oder eine Tür herzustellen bzw. bereitzustellen, dass einfach herstellbar ist und das gute statische als auch gute thermische Eigenschaften aufweist.

Die Aufgabe der Erfindung wird bei dem eingangs genannten Fenster bzw. bei der eingangs genannten Tür dadurch gelöst, dass die Flügelrahmenprofile und/oder die Blendrahmenprofile einen Kern aus einem Wärmedämmstoff aufweisen, der bei einer Massetemperatur im Extruder von 200 °C einem Druck von bis zu 150 bar standhält, und der von einer Umhüllung aus einem thermoplastischen Kunststoff umgeben ist, wobei die Umhüllung auf den Kern aufextrudiert ist. Weiter wird die Aufgabe der Erfindung mit dem eingangs genannte Verfahren gelöst, nach dem als wärmedämmender Kern ein Wärmedämmstoff eingesetzt wird, der bei einer Massetemperatur im Extruder von 200 °C einem Druck von bis zu 150 bar standhält, und dieser Wärmedämmstoff dem Extruder zugeführt und in diesem der thermoplastische Kunststoff auf den Wärmedämmstoff aufextrudiert wird.

Von Vorteil ist dabei, dass durch den hoch druckfesten Wärmedämmstoff nicht nur die Wärmedämmung der Profile verbessert wird, sondern dass darüber hinaus auch noch die statischen Eigenschaften der Profile verbessert werden. Es ist auf diese Weise möglich, auf zusätzlich Versteifungsprofile aus Metall in den Kunststoffprofilen zu verzichten, wodurch zusätzliche Arbeitsschritte für das Einbringen dieser Versteifungsprofile in die Flügelrahmenprofile bzw. Blendrahmenprofile vermieden werden. Darüber hinaus können mit der Zuführung des Wärmedämmstoffes zum Extruder und das Durchschieben durch den Extruder auf Arbeitsschritte zum Einschieben von Wärmedämmprofilen in die fertigen Kunststoffprofile entfallen, wodurch ebenfalls die Zahl der notwendigen Arbeitsschritte zur Herstellung von Fenstern oder Türen reduziert werden kann. Darüber hinaus wird durch das Anextrudieren der Umhüllung aus dem thermoplastischen Kunststoff an den Kern ein guter Verbund zwischen Umhüllung und Kern erreicht, wodurch ebenfalls die statischen Eigenschaften der Flügelrahmenprofile bzw. der Blendrahmenprofile verbessert werden können.

Nach ein Ausführungsvariante der Erfindung ist vorgesehen, dass der hoch druckfeste Wärmedämmstoff ausgewählt ist bzw. ausgewählt wird aus einer Gruppe umfassend XPS, EPS, PUR, PIR, Mineralwolle, Schaumglas oder Mischungen daraus. Insbesondere mit diesen Werkstoffen konnten die voranstehend genannten Effekte nicht nur erreicht sondern noch verbessert werden.

Es kann weiter vorgesehen sein, dass der Kern mit der Umhüllung formschlüssig verbunden ist. Dazu kann der hoch druckfeste Wärmedämmstoff vor der Zuführung zu dem Extruder formgebend bearbeitet werden. Durch die formschlüssige Verbindung wird der Werkstoffverbund zwischen dem thermoplastischen Kunststoff der Umhüllung und dem hoch druckfesten Wärmedämmstoff des Kerns weiter verbessert, wodurch die Lastabtragung durch die Flügelrahmenprofile bzw. die Blendrahmenprofile weiter verbessert werden kann.

Aus demselben Grund kann alternativ oder zusätzlich dazu vorgesehen werden, dass der Kern stoffschlüssig mit der Umhüllung verbunden ist. Beispielsweise kann dazu der Kern im Extruder oberflächlich angeschmolzen werden.

Es ist weiter möglich, dass die Umhüllung ein Hohlkammerprofil mit mehreren Hohlkammern ist, wobei der Kern nur in einer der mehreren Hohlkammern angeordnet ist. Es ist damit möglich ein Profil zur Verfügung zu stellen, dass zusätzliche leere Hohlkammern aufweist, um beispielsweise Teile von Beschlägen, etc. aufzunehmen. Dadurch kann auf das nachträglich ausfräsen bzw. ausschneiden des Kerns verzichtet werden, wodurch die Einbringung dieser zusätzlichen Fenster- oder Türbestandteile vereinfacht werden kann, indem lediglich die Umhüllung entsprechend bearbeitet werden muss. Darüber hinaus kann damit erreicht werden, dass ein Kernprofil für unterschiedlichste Hohlkammerprofile verwendet werden kann, indem nämlich nur die eine Hohlkammer entsprechend der Geometrie des Kern ausgebildet werden muss, darüber hinaus aber volle gestalterische Vielfalt in der Formgebung der Hohlkammerprofile zur Verfügung steht.

Nach einer anderen Ausführungsvariante des Fensters oder der Tür kann vorgesehen werden, dass im Stoßbereich zweier aneinander anliegender Flügelrahmenprofile und/oder Blendrahmenprofile sowohl die aneinander anliegenden Kerne als auch die aneinander anliegenden Umhüllungen jeweils miteinander verbunden sind. Anders als bei aus dem Stand der Technik bekannten Fenstern, bei denen lediglich die Hohlkammerprofile in den Ecken miteinander verbunden werden, kann mit dieser Ausführungsvariante durch die Verbindung der Kerne miteinander dem Eckbereich eine bessere Steifigkeit verliehen werden.

Nach einer Ausführungsvariante des Verfahrens kann vorgesehen sein, dass der hoch druckfeste Wärmedämmstoff vor der Zuführung zu dem Extruder verdichtet wird, wodurch eine weitere Verbesserung der statischen Eigenschaften des Fensters oder der Tür erreicht werden kann.

Alternativ dazu oder zusätzlich dazu kann vorgesehen werden, dass der hoch druckfeste Wärmedämmstoff im Extruder selbst zumindest teilweise verdichtet wird, wodurch die Anzahl der Arbeitsschritte im Vergleich zur voranstehend genannten Ausführungsvariante verringert werden kann.

Es kann auch vorgesehen werden, dass ein hoch fester Wärmedämmstoff eingesetzt wird, dessen Schmelzpunkt um zumindest 50 °C höher ist, als der Schmelzpunkt des thermoplastischen Kunststoffes, wodurch der Wärmedämmstoff im Extruder durch die thermische Belastung keine Veränderung erfährt und damit formstabiler ist, sodass ein gegebenenfalls dem Extruder nachgeschaltete Kalibrierstrecke für die zumindest teilweise mit dem Kern gefüllten Kunststoffprofile einfacher gestaltet werden kann bzw. die Kalibrierung schneller erfolgen kann.

Zum besseren Verständnis der Erfindung wird diese anhand der nachfolgenden Figuren näher erläutert.

Es zeigen jeweils in vereinfachter, schematischer Darstellung:
- Fig. 1: einen Querschnitt durch ein Blendrahmenprofil;
- Fig. 2: einen Querschnitt durch ein Flügelrahmenprofil;
- Fig. 3: eine Vorrichtung zum Anextrudieren der Umhüllung an den Kern aus dem hoch druckfesten Wärmedämmstoff.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

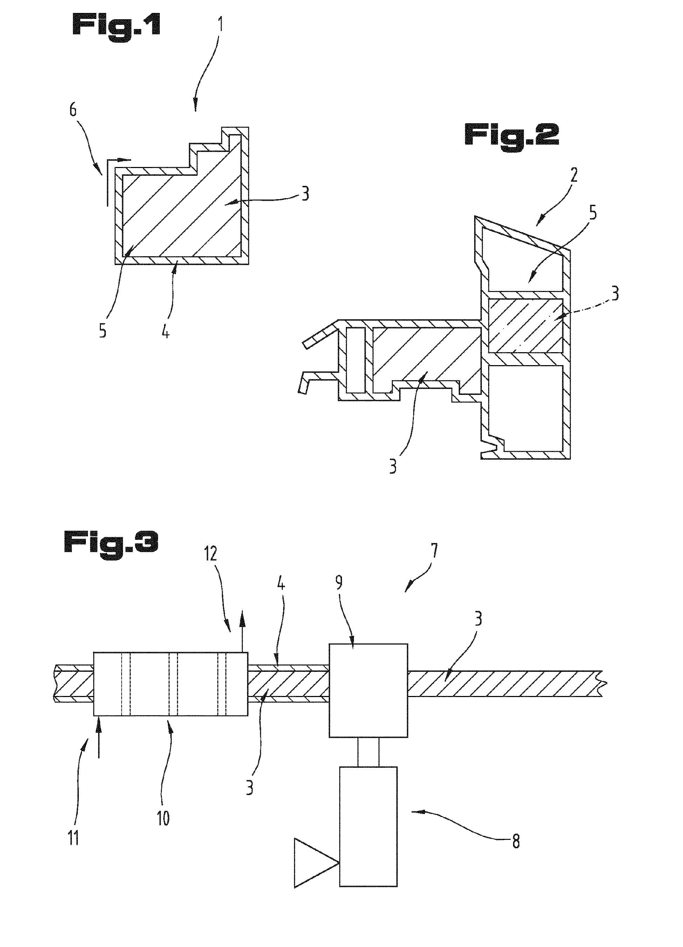

In Fig. 1 ist ein Querschnitt einer Ausführungsvariante eines Blendrahmenprofils 1 dargestellt. Weiter ist in Fig. 2 eine Ausführungsvariante eines Flügelrahmenprofils 2 dargestellt.

Es sei bereits an dieser Stelle erwähnt, dass die dargestellten Profilquerschnitte lediglich beispielhaften Charakter haben und dass im Rahmen der Erfindung auch andere Profilquerschnitte möglich sind.

Derartige Blendrahmenprofile 1 und Flügelrahmenprofile 2 werden zur Ausbildung von einem Fenster oder einer Tür zum Verschließen von Maueröffnungen in Gebäuden verwendet.

Wie an sich bekannt, wird durch Verbinden mehrerer Blendrahmenprofilen 1 ein Blendrahmen für ein Fester oder eine Tür hergestellt. Ebenso wird durch Verbinden mehrerer Flügelrahmenprofile 2 ein Flügelrahmen für ein Fester oder eine Tür hergestellt. Der Blendrahmen ist dabei jener Teil des Fensters oder der Tür, an dem der Flügelrahmen im geschlossenen Zustand anliegt.

Es ist auch möglich, dass das Fenster lediglich einen Flügelrahmen aufweist, wenn es sich um eine Fixverglasung handelt, dass Fenster also nicht öffenbar ist.

Je nach Geometrie des Fensters werden zumindest drei Blendrahmenprofile 1 bzw. zumindest drei Flügelrahmenprofile 2 miteinander an den Stirnseiten zum Blendrahmen bzw. Flügelrahmen verbunden. Die Verbindung erfolgt üblicherweise durch Schweißen.

Das Blendrahmenprofil 1 nach Fig. 1 besteht aus einem Kern 3 bzw. weist einen Kern 3 auf, der von einer Umhüllung 4 umgeben ist. Das Blendrahmenprofil 1 weist in der dargestellten Ausführungsvariante lediglich eine Hohlkammer 5 auf, die zur Gänze von dem Kern 3 ausgefüllt ist, sodass also die Umhüllung 4 über den gesamten Umfang gemäß Pfeil 6 direkt auf der Oberfläche des Kerns 3 anliegt.

Wie aus Fig. 2 ersichtlich ist, besteht aber auch die Möglichkeit, dass mehrere Hohlkammern 5 ausgebildet sind. In der dargestellten Ausführungsvariante des Flügelrahmenprofils 2 weist dieses fünf Hohlkammern 5 auf. Diese Anzahl an Hohlkammern 5 hat nur beispielhaften Charakter. Es können auch weniger oder mehr als fünf Hohlkammern 5 ausgebildet sein, beispielsweise zwei, drei, vier, sechs, sieben, etc.

Es können also sowohl das Blendrahmenprofil 1 als auch das Flügelrahmenprofil 2 eine oder mehrere Hohlkammern 5 aufweisen.

Für den Fall, dass das Blendrahmenprofil 1 und/oder das Flügelrahmenprofil 2 mehr als eine Hohlkammer 5 aufweist bzw. aufweisen, kann der Kern 3 in lediglich einer Hohlkammer 5 oder können mehrere Hohlkammern 5 mit einem Kern 3 versehen sein, wobei in letzterem Fall entweder sämtliche Hohlkammern 5 oder mehrere aber nicht alle der Hohlkammern 5 mit einem Kern 3 ausgefüllt sind. Dazu ist in Fig. 2 dargestellt, dass zwingend eine der Hohlkammern 5 einen Kern 3 aufweist und fakultativ in einer weiteren Hohlkammer 5 ein weitere Kern 3 angeordnet ist (in Fig. 2 mit strichlierter Schraffur dargestellt). In jeder Hohlkammer 5 in der ein Kern 3 angeordnet ist, füllt dieser die Hohlkammer 5 zur Gänze aus, wie dies voranstehend bereits beschrieben wurde.

Die Umhüllung 4 besteht au einem bzw. umfasst einen thermoplastischen Kunststoff, beispielsweise Polypropylen (PP) oder einem WPC (wood plastic composite). Insbesondere besteht die Umhüllung aus Polyvinylchlorid (PVC).

Zumindest an der Außenseite, die der Bewitterung ausgesetzt ist, kann bzw. können das Blendrahmenprofil 1 und/oder das Flügelrahmenprofil 2 im fertigen Fenster oder der fertigen Tür mit einer Vorsatzschale aus Aluminium, wie dies an sich bekannt ist, versehen sein.

Der Kern 3 besteht aus einem hoch druckfesten Wärmedämmstoff, insbesondere ausgewählt aus einer Gruppe umfassend XPS (extrudierter Polystyrol-Hartschaum), EPS (expandiertes Polystyrol), PUR (Polyurethan-Hartschaum), PIR (Polyisocyanurat- Schaumstoff), Mineralwolle, Schaumglas sowie Mischungen daraus. Besonders bevorzugt besteht der Kern 3 aus verdichteter Mineralwolle (verdichteter Steinwolle).

Unter dem Begriff "hoch druckfester Wärmedämmstoff" wird ein Wärmedämmstoff für den Kern 3 verstanden, der eine Festigkeit bei einer Massetemperatur im Extruder von 200 °C aufweist, die so hoch ist, dass der Kern 3 einem Druck von bis zu 150 bar standhält. Insbesondere weist der Kern 3 eine Langzeitdruckfestigkeit nach DIN 1606 in der Fassung zum Anmeldetag gegenständlicher Erfindung von mindestens 300 kPa, vorzugsweise zwischen 300 kPa und 400 kPa, auf.

Vorzugsweise beträgt die Rückstellzeit der Wärmedämmstoffs nach der Druckbelastung im Extruder zwischen 2 Sekunden und 30 Sekunden, sodass ein maßgenaues Kalibrieren verbessert werden kann.

Die Umhüllung 4 ist auf den Kern 3 aufextrudiert, wie dies im Folgenden noch näher ausgeführt wird.

Im einfachsten Fall weist die Hohlkammer 5, in der der Kern 3 angeordnet ist, einen quadratischen oder rechteckförmigen Querschnitt auf. Die Hohlkammer 5 kann aber auch einen dazu abweichenden Querschnitt aufweisen, beispielsweise einen teilweise gestuften, wie dies in Fig. 1 dargestellt ist, oder einen Querschnitt, der mit eine Nut aufweist, wie dies in Fig. 2 dargestellt ist. Damit wird es möglich, dass die Umhüllung 4 nicht nur an dem Kern 3 anliegt sondern mit diesem formschlüssig verbunden ist. Der Kern 3 kann dazu vor dem Ummanteln mit der Umhüllung 4 formgebend bearbeitet werden, indem beispielsweise zumindest eine, gegebenenfalls hinterschnittene, Nut oder die Stufung hergestellt wird, beispielsweise durch Schneiden oder Fräsen. Es ist aber auch möglich, dass die jeweilige Querschnittsform des Kerns 3 durch Verpressen bzw. Verdichten des Wärmedämmstoffs in einem Formgebungswerkzeug hergestellt wird. Generell kann der Kern 3 bereits in der gewünschten Querschnittsform als Stangenmaterial hergestellt werden bzw. kann es aus einem Block bzw. einer Platte hergestellt werden, beispielsweise durch Scheiden oder Fräsen.

In Fig. 3 ist eine Ausführungsvariante einer Vorrichtung 7 zur Herstellung des Blendrahmenprofils 1 und/oder des Flügelrahmenprofils 2 gezeigt. Diese Vorrichtung umfasst einen Extruder 8, der ein Formgebungswerkzeug 9 aufweist. In dem Formgebungswerkzeug 9 wird die Querschnittsform der Umhüllung 4, d.h. die Querschnittform des Blendrahmenprofils 1 bzw. des Flügelrahmenprofils 2 festgelegt, wie dies an sich in der Fertigung von Fensterprofilen oder Türprofilen bekannt ist. Es sei daher zur Vermeidung von Wiederholungen dazu auf den einschlägigen Stand der Technik verwiesen.

Im Extruder 8 wird ein Kunststoffgranulat aus dem thermoplastischen Kunststoff für die Umhüllung aufgeschmolzen bzw. eine entsprechende Mischung aus diesem Kunststoffgranulat mit anderen Zusatzstoffen, wie z.B. Farbstoffe, hergestellt und aufgeschmolzen. Die Schmelze wird der Formgebungseinrichtung 9 zugeführt und durch diese gepresst, wodurch das Blendrahmenprofil 1 bzw. das Flügelrahmenprofil 2 als Stangenware ausgebildet wird.

Der hoch druckfeste Wärmedämmstoff für den Kern 3 wird ebenfalls dem Formgebungswerkzeug 9 zugeführt und durch dieses geschoben oder gezogen. Im Formgebungswerkzeug 9 wird der Kern 3 mit dem thermoplastischen Kunststoff, aus dem die Umhüllung 4 hergestellt wird, umgossen, sodass der Kern 3 in zumindest einer Hohlkammer 5 (z.B. Fig. 2) des Flügelrahmenprofils 2 oder des Blendrahmenprofils 1 diese vollständig ausfüllend angeordnet ist.

Der Kern 3 hat vor dem Formgebungswerkzeug 9 zumindest annähernd bereits die Querschnittsform, die die Hohlkammer 5, in der er angeordnet ist, im fertigen Blendrahmenprofil 1 oder im fertigen Flügelrahmenprofil 2 aufweist.

Sofern das Blendrahmenprofil 1 bzw. das Flügelrahmenprofil 2 als Hohlkammerprofile mit mehreren Hohlkammern 5 hergestellt werden und der hoch druckfeste Wärmedämmstoff in mehreren Hohlkammern 5 angeordnet werden soll, wird dem Formgebungswerkzeug 9 eine der zu füllenden Hohlkammern 5 entsprechende Anzahl an getrennten Kernen 3 zugeführt.

Die Vorrichtung 7 kann gegebenenfalls in Produktionsrichtung nach dem Formgebungswerkzeug 9 eine Kalibriervorrichtung 10 aufweisen. In diesem wird das das Formgebungswerkzeug 9 verlassende Blendrahmenprofil 1 bzw. Flügelrahmenprofil 2 kontrolliert abgekühlt, insbesondere mit Wasser, wozu die Kalibriervorrichtung entsprechende Kühlmittelanschlüsse 11, 12 aufweist. Vorzugsweise wird das Kühlmittel im Gegenstrom zur Förderrichtung des Blendrahmenprofils 1 bzw. Flügelrahmenprofils 2 geführt. Durch die kontrollierte Abkühlung schrumpft die Umhüllung 4 kontrolliert und legt sich damit besser (enger) an den Kern 3 an, wodurch die Verbundbildung begünstigt wird.

Gemäß einer Ausführungsvariante des Fensters oder der Tür kann vorgesehen sein, dass alternativ oder zusätzlich zu einer formschlüssigen Verbindung zwischen dem Kern 3 und der Umhüllung 4 eine stoffschlüssige Verbindung ausgebildet wird.

Dies kann z.B. dadurch erreicht werden, dass der Wärmedämmstoff des Kerns 3 oberflächlich angeschmolzen wird, sodass sich dieser geschmolzene Bereich mit der Kunststoffschmelze für die Umhüllung verbindet. Das oberflächliche Anschmelzen kann beispielsweise im Extruder 8 selbst erfolgen, wozu für den Kern ein Wärmedämmstoff verwendet wird, der bei der Temperatur, die das Formgebungswerkzeug 9 hat oberflächlich anschmilzt. Das vollständige Aufschmelzen des Wärmedämmstoffs ist dabei jedoch zu vermeiden. Insbesondere kann in diesem Fall ein Wärmedämmstoff verwendet werden, der eine Schmelztemperatur im Bereich von 90 % bis 105 % der Schmelztemperatur des thermoplastischen Kunststoffes für die Umhüllung aufweist.

Es ist jedoch auch möglich, dass der Wärmedämmstoff bereits vor dem Eintritt in das Formgebungswerkzeug 9 aufgeschmolzen wird.

Gegebenenfalls kann es günstig sein, wenn der Wärmedämmstoff für den Kern 3 dem Formgebungswerkzeug 9 gekühlt zugeführt wird, damit er im Formgebungswerkzeug 9 nicht vollständig aufschmilzt.

Gemäß einer alternativen Ausführungsvariante dazu kann vorgesehen sein, dass für den Kern 3 ein hoch fester Wärmedämmstoff eingesetzt wird, dessen Schmelzpunkt um zumindest 50 °C, insbesondere um mindestens 100 °C, höher ist, als der Schmelzpunkt des thermoplastischen Kunststoffes. Es wird damit das Anschmelzen des Wärmedämmstoffes im Formgebungswerkzeug 9 vermieden. Für diese Ausführungsvariante wird bevorzugt eine Mineralwolle bzw. Steinwolle zur Herstellung des Kerns 3 eingesetzt. Dabei kann der Kern vollständig aus der Mineralwolle bzw. Steinwolle bestehen.

Es ist im Rahmen der Erfindung auch möglich, einen mehrschichtigen Kern 3 zu verwenden. Dieser besteht bzw. umfasst insbesondere einen Innenkern aus einem ersten hoch druckfesten Wärmedämmstoff, der auch eine geringere Schmelztemperatur aufweisen kann. Um diesen Innenkern vor dem Temperatureinfluss im Formgebungswerkzeug 9 zu schützen, kann der Innenkern mit einer höher schmelzenden Werkstoff ummantelt sein, das in dem Formgebungswerkzeug nicht aufschmilzt. Insbesondere kann diese Ummantelung aus Mineralwolle bzw. Steinwolle bestehen. Nachdem die Wärmedämmung auch in Richtung auf den Innenkern wirkt, kann über die kurze Zeitspanne, in der sich ein Querschnittselement im Einflussbereich des Formgebungswerkzeuges 9 befindet, ist es möglich, das Aufschmelzen des Kerns 9 im Formgebungswerkzeug 9 zu vermeiden.

Zur weiteren Verbesserung der Druckfestigkeit des Wärmedämmstoffes für den Kern 3 kann vorgesehen sein, dass dieser verdichtet wird. Die Verdichtung kann einerseits bereits vor der Zuführung des Wärmedämmstoffes zum Formgebungswerkzeug 9 erfolgen. Andererseits kann die Verdichtung zusätzlich oder alternativ dazu im Formgebungswerkzeug 9 selbst durchgeführt werden. Dazu weist das Formgebungswerkzeug 9 im Bereich der Zuführung des Wärmedämmstoffes einen Durchbruch mit einem Querschnitt auf, der kleiner ist, als der Querschnitt des Wärmedämmstoffes 3, sodass dieser beim Durchschieben durch das Formgebungswerkzeug 9 komprimiert wird. Diese Verdichtung kann mit einer Vorverdichtung außerhalb der Formgebungswerkzeuges 9 kombiniert werden.

Wie bereits erwähnt, wird aus den Blendrahmenprofilen 1 ein Blendrahmen und aus den Flügelrahmenprofilen 2 ein Flügelrahmen für ein Fester oder eine Tür hergestellt. Dazu werden die Umhüllungen 4 der Profile an den Eckbereichen, die üblicherweise auf Gehrung geschnitten werden, miteinander verschweißt. Darüber hinaus können auch die Kerne 3 in den Eckbereichen miteinander stoffschlüssig verbunden werden, beispielsweise indem diese ebenfalls miteinander verschweißt werden oder indem diese miteinander verklebt werden.

Obwohl im Flügelrahmen bzw. im Blendrahmen kein zusätzliches Versteifungsprofil aus Metall oder einem WPC angeordnet werden muss, besteht selbstverständlich bei Bedarf die Möglichkeit der Anordnung in einer Hohlkammer 5 der Profile, beispielsweise für sehr großflächige Fenster oder Türen, um damit die Lastabtragung zu verbessern. Gegebenenfalls kann dabei das zumindest eine Versteifungsprofil in dem hoch druckfesten Wärmedämmstoff angeordnet werden. Es kann dazu z.B. aus dem hochdruckfesten Wärmedämmstoff und dem zumindest einen Versteifungsprofil ein Halbfertigfabrikat erzeugt werden, dass in weiterer Folge dem Formgebungswerkzeug 9 zugeführt und wie voranstehend beschrieben verarbeitet wird.

Der Vollständigkeit halber sei angemerkt, dass die Stirnflächen des Blendrahmenprofils 1 bzw. des Flügelrahmenprofils 2 herstellungsbedingt keine Umhüllung 4 aufweisen.

Weiter sei angemerkt, dass in einem Fenster oder einer Tür der Blendrahmen aus den voranstehend beschriebenen Blendrahmenprofilen 1 oder der Flügelrahmen aus den voranstehend beschriebenen Flügelrahmenprofilen 2 oder sowohl der Blendrahmen aus den voranstehend beschriebenen Blendrahmenprofilen 1 und der Flügelrahmen aus den voranstehend beschriebenen Flügelrahmenprofilen 2 hergestellt sein kann.

Die Ausführungsbeispiele zeigen bzw. beschreiben mögliche Ausführungsvarianten des Blendrahmenprofils 1 bzw. des Flügelrahmenprofils 2, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus des Blendrahmenprofils 1 bzw. des Flügelrahmenprofils 2 diese bzw. deren Bestandteile teilweise unmaßstäblich und/oder vergrößert und/oder verkleinert dargestellt wurden.

### Bezugszeichenaufstellung

- 1: Blendrahmenprofil
- 2: Flügelrahmenprofil
- 3: Kern
- 4: Umhüllung
- 5: Hohlkammer
- 6: Pfeil
- 7: Vorrichtung
- 8: Extruder
- 9: Formgebungswerkzeug
- 10: Kalibriervorrichtung
- 11: Kühlmittelanschluss
- 12: Kühlmittelanschluss

## Patentansprüche

1. Fenster oder Tür für ein Gebäude mit einem Flügelrahmen und einem Blendrahmen, wobei der Flügelrahmen miteinander verbundene Flügelrahmenprofile (2) und der Blendrahmen miteinander verbundene Blendrahmenprofile (1) aufweisen, **dadurch gekennzeichnet, dass** die Flügelrahmenprofile (2) und/oder die Blendrahmenprofile (1) zumindest einen Kern (3) aus zumindest einem Wärmedämmstoff aufweisen, der bei einer Massetemperatur im Extruder von 200 °C einem Druck von bis zu 150 bar standhält, und der von einer Umhüllung (4) aus einem thermoplastischen Kunststoff umgeben ist, wobei die Umhüllung (4) auf den Kern (3) aufextrudiert ist.

2. Fenster oder Tür nach Anspruch 1, **dadurch gekennzeichnet, dass** der hoch druckfeste Wärmedämmstoff ausgewählt ist aus einer Gruppe umfassend XPS, EPS, PUR, PIR, Mineralwolle, Schaumglas.

3. Fenster oder Tür nach Anspruch 1 oder 2, **dadurch gekennzeichnet, dass** der zumindest eine Kern (3) mit der Umhüllung (4) formschlüssig verbunden ist.

4. Fenster oder Tür nach einem der Ansprüche 1 bis 3, **dadurch gekennzeichnet, dass** der zumindest eine Kern (3) stoffschlüssig mit der Umhüllung (4) verbunden ist.

5. Fenster oder Tür nach einem der Ansprüche 1 bis 4, **dadurch gekennzeichnet, dass** die Umhüllung (4) ein Hohlkammerprofil mit mehreren Hohlkammern (5) ist, wobei der Kern (3) nur in einer der mehreren Hohlkammern angeordnet ist.

6. Fenster oder Tür nach einem der Ansprüche 1 bis 5, **dadurch gekennzeichnet, dass** im Stoßbereich zweier aneinander anliegender Flügelrahmenprofile (2) und/oder Blendrahmenprofile (1) sowohl die aneinander anliegenden Kerne (3) als auch die aneinander anliegenden Umhüllungen (4) jeweils miteinander verbunden sind.

7. Verfahren zur Herstellung eines Fensters oder eine Tür für ein Gebäude nach dem aus Flügelrahmenprofilen (2) ein Flügelrahmen und aus Blendrahmenprofilen (1) ein Blendrahmen hergestellt wird, wobei die Flügelrahmenprofile (2) und/oder die Blendrahmenprofile (1) aus Kunststoffprofilen aus einem thermoplastischen Kunststoff in einem Formgebungswerkzeug (9) eines Extruders (8) extrudiert werden und in diesen Flügelrahmenprofilen (29 und/oder die Blendrahmenprofilen (1) ein wärmedämmender Kern (3) angeordnet wird, **dadurch gekennzeichnet, dass** als wärmedämmender Kern (3) zumindest ein Wärmedämmstoff eingesetzt wird, der bei einer Massetemperatur im Extruder von 200 °C einem Druck von bis zu 150 bar standhält, und dass dieser Wärmedämmstoff dem Formgebungswerkzeug (9) des Extruders (8) zugeführt und in diesem der thermoplastische Kunststoff der Umhüllung (4) auf den Wärmedämmstoff aufextrudiert wird.

8. Verfahren nach Anspruch 7, **dadurch gekennzeichnet, dass** ein hoch druckfestes Wärmedämmstoff eingesetzt wird, der ausgewählt ist aus einer Gruppe umfassend XPS, EPS, PUR, PIR, Mineralwolle, Schaumglas.

9. Verfahren nach Anspruch 7 oder 8, **dadurch gekennzeichnet, dass** der hoch druckfeste Wärmedämmstoff vor der Zuführung zu dem Formgebungswerkzeug (9) des Extruders (8) formgebend bearbeitet wird.

10. Verfahren nach einem der Ansprüche 7 bis 9, **dadurch gekennzeichnet, dass** der hoch druckfeste Wärmedämmstoff vor der Zuführung zu dem Formgebungswerkzeug (9) des Extruders (8) verdichtet wird.

11. Verfahren nach einem der Ansprüche 7 bis 9, **dadurch gekennzeichnet, dass** der hoch druckfeste Wärmedämmstoff im Formgebungswerkzeug (9) des Extruders (8) verdichtet wird.

12. Verfahren nach einem der Ansprüche 7 bis 11, **dadurch gekennzeichnet, dass** der Kern (3) im Formgebungswerkzeug (9) des Extruders (8) oberflächlich angeschmolzen wird.

13. Verfahren nach einem der Ansprüche 7 bis 11, **dadurch gekennzeichnet, dass** ein hoch fester Wärmedämmstoff eingesetzt wird, dessen Schmelzpunkt um zumindest 50 °C höher ist, als der Schmelzpunkt des thermoplastischen Kunststoffes.
